# EUROPEAN PATENT APPLICATION

(11) **EP 4 813 345 A1**
(43) Date of publication of application: **30.09.2026**
(21) Application number: 26167762.9
(22) Date of filing: 25.03.2026
(51) Int. Cl.: A61C 8/00

(54) **APPARATUS AND METHOD FOR ANCHORING DENTAL PROSTHESIS**

(30) Priority: 25.03.2025 IT 202500006153
(71) Applicant: Phentagon Lab S.r.l., 02100 Rieti (IT)
(72) Inventor: Loreti, Riccardo, 02100 Rieti (IT)
(74) Representative: Mola, Edoardo

(57) **Abstract**

A dental prosthesis anchoring device, comprising an intermediate anchoring element (1) provided with a first surface (2) for anchoring to an overlying dental prosthesis (3) by means of a plurality of first anchoring points (4) and a second surface (5) for anchoring to at least one underlying dental implant by means of at least four second anchoring points (6).

## Description

### FIELD OF INVENTION

The invention concerns the field of dental implantology, or integration techniques between dental patients' bone and implants, such as titanium screws and pins, necessary to restore teeth and allow patients to regain proper chewing with fixed teeth.

### STATE OF THE ART

It is known that modern implantology arose from the study of the intimate union that can be created between metal and bone.

Dental implants replace the root of the tooth and are typically screwed into a hole drilled in the mandibular or maxillary bone. These dental implants feature a coupling system with a dental abutment via a hexagonal or other shaped engagement and a metric screw that passes through the dental abutment and is securely screwed into the dental implant.

In the case of a cemented crown, the three structures of the implant (titanium screw, abutment, and dental cap or crown) remain separate from each other. The abutment is connected and secured to the dental implant, after which the crown is secured over the abutment with a special dental cement.

In the case of a screw-retained crown, the abutment and the crown (the anatomical shape of the tooth) form a single unit. The prosthetic structure has a small hole inside for the passage of a through screw, which is screwed into the dental implant using special implant screwdrivers. The hole needed for the screwdriver to pass through is then closed with a filling material.

In general, a prosthesis with a cemented crown will be more aesthetically pleasing, as its surface is free of connection holes, while a screw-retained crown implant allows for easier removal and, since it does not require any cement, will be better tolerated by the gum tissue.

Currently, implant solutions known under the trade names "All on Four" and "All on Six" are available. These allow for the rehabilitation of an entire upper or lower arch by inserting a limited number of endosseous dental implants, generally four or six placed along the gum line along the upper or lower arch, appropriately distributed and angled to allow for anchoring of the prosthesis and proper distribution of the masticatory load.

This rehabilitation technique generally involves screwing the denture onto four dental implants, two of which are positioned anteriorly and two in the molar/premolar area. These implants are inserted into the bone at an angle to ensure proper masticatory force distribution. This is also achieved through the use of special abutments, known as Multi-Unit Abutments (MUAs), which can be mounted straight or angled to better compensate for the positioning angle of the dental implants. This creates a secure attachment interface for the denture, eliminating undercuts.

In the field of dental implantology, so-called "immediate loading" techniques are also well-known, including the aforementioned "All-On-Four" and "All-On-Six" techniques. These were developed to offer the possibility of placing the denture over the implants as little as 24-48 hours after surgery, thus allowing patients to avoid being left without permanent teeth for too long due to healing times.

These well-known techniques offer numerous advantages over more traditional implant techniques and are increasingly widespread and used to provide patients with a stable and long-lasting solution for their missing teeth, even in cases of severely compromised residual teeth or complete edentulism.

Despite considerable advances in the field, currently known dental implant techniques still present significant limitations because, in general, the spatial positions of dental implants fixed in the bone consequently determine the positions of the through screws that secure the reconstructed dental arch to the implants themselves. This condition creates a significant limitation on the aesthetic and functional quality of the prosthesis. The spatial positions of the through-screw hole very often fall into positions incompatible with the aesthetics of the prosthesis, or even more so, into positions that can compromise the structural strength of the prosthesis under masticatory load.

### SCOPE OF THE INVENTION

The state of the art therefore highlights the need for a system of components and a method for their use that overcomes the drawbacks of known solutions and achieves both technical and economic advantages in the fabrication of both full-arch and partial-arch screw-retained dental prostheses, as well as bridges with two or more teeth.

### SUMMARY OF THE INVENTION

This and other objectives have been achieved by developing a prosthetic device and a method according to one of the appended claims, which provides an intermediate anchoring element, such as a full-arch element, which can be attached to an overlying dental prosthesis by means of initial upper anchoring points and to an underlying dental implant by means of additional anchoring points.

With the solution adopted, a first advantage is that the prosthesis (anatomical part/shape of the teeth called the "shell"), which can be made of zirconia, PMMA, or other suitable polymers, can be securely attached to the full-arch structure made of metal or other materials, independently of the screws that secure it to the dental implants.

A further advantage is that the dentist and dental technician can choose the anchoring points based on the correct distribution of the masticatory load and also respecting the patient's aesthetic needs.

A further advantage is that the prosthesis design can be achieved with well-known commercially available software using digital techniques.

A further advantage is that the prosthetic components included in the present invention can be easily manufactured using CNC machines.

### LIST OF DRAWINGS

These and other advantages will be better understood by anyone skilled in the art from the following description and the accompanying drawings, given as nonlimiting examples, in which:
- Figures 1a and 1b respectively show an exploded view in two different assembly stages of a full-arch prosthesis according to the invention;
- Figures 2a-2d respectively show a top view, a bottom view, a three-quarter view from the right, and a three-quarter view from the left of the arch shown in Figures 1a and 1b;
- Figure 3 shows a detail of the arch shown in Figures 1a and 1b; and
- Figure 4 shows a further embodiment of the present invention.

### DETAILED DESCRIPTION

With reference to the attached drawings, a preferred embodiment of a prosthetic device according to the invention is described.

In the illustrated example, the device comprises a full-arch intermediate anchoring element 1 provided with an upper surface 2 designed to allow the anchoring of an overlying dental prosthesis 3 through a distribution of upper anchoring points 4.

Preferably, the anchoring points 4 of the intermediate element 1 comprises a seat 7 formed in the intermediate element 1 and a captive screw 8 that can remain anchored with its lower portion 9 inserted into the seat 7.

In order to make the coupling between screw 8 and the intermediate element more effective, it is advantageous to provide that the external shape of insertion portion 9 and the shape of seat 7 that houses the screw are such as to prevent relative rotation, for example, of a polygonal shape. Furthermore, the attachment of screw 8 to element 1 can be facilitated and improved by creating insertion part 9 with an undercut 12 that allows the screw to be anchored in the intermediate element using a suitable hardening filler material, such as cement.

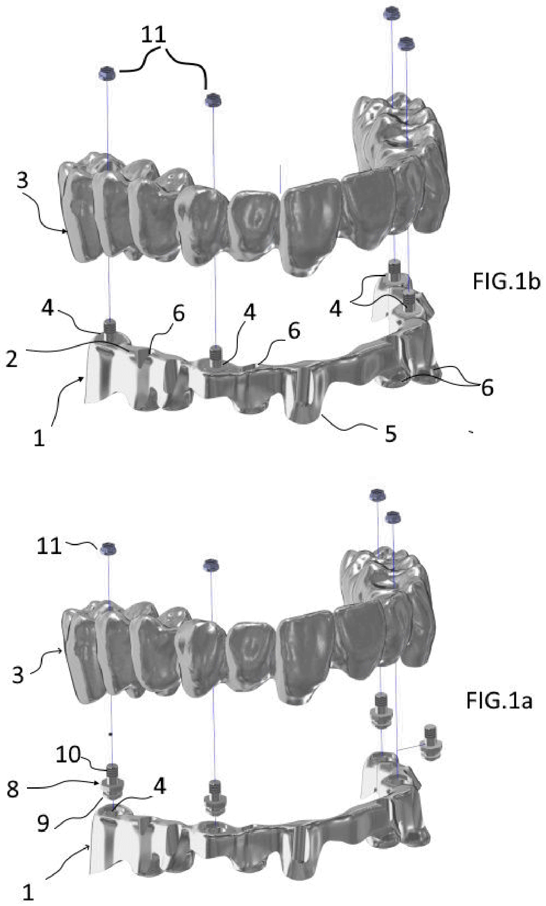

With reference to Figure 1b, once screw 8 is secured in seat 7, the upper protruding part 10 of the screw can be used to secure dental prosthesis 3 to intermediate element 1 by tightening a corresponding anchoring element 11, for example, using a threaded coupling.

Intermediate element 1 is also provided with a lower surface 5 designed to anchor element 1 to at least one underlying endosseous dental implant (not shown) through a distribution of anchoring points 6.

Preferably, anchoring points 6 may be four or six points, for example, four distributed and angled through holes for the use of fastening screws to abutments and pins fixed to a patient's bone structure according to the technique known as "All On Four" (commercial name) or six points according to the "All On Six" technique (commercial name) .

It is understood, however, that the techniques used for anchoring the intermediate element to the dental implant are indicated here by way of example but may vary depending on the available implantology techniques.

Similarly, the attached figures represent a full-arch prosthetic device, but the invention may be applied to partial-arch prostheses or bridges with two or more teeth.

Preferably, both the dental prosthesis 3 and the pontic 1 may be made of a suitable biocompatible material, for example, one or more materials selected from medical-grade titanium alloys, cobalt-chromium steel, polymethyl methacrylate (PMMA), polyetheretherketone (PEEK), lithium disilicate, or zirconium oxide.

In particular, zirconium oxide, or "zirconia," may be used from discs produced by isostatic pressing of zirconia powders, shaped, for example, using CNC computerized milling techniques with simultaneous 3-, 4-, or 5-axis movement.

The invention offers significant advantages, particularly because the prosthesis can be stably secured to the pontic independently of the screws securing it to the dental implants, allowing the dentist and dental technician to individually select the anchoring points based on the patient's functional and aesthetic needs.

The present invention has been described according to preferred embodiments, but equivalent variants may be conceived without departing from the scope of protection granted.

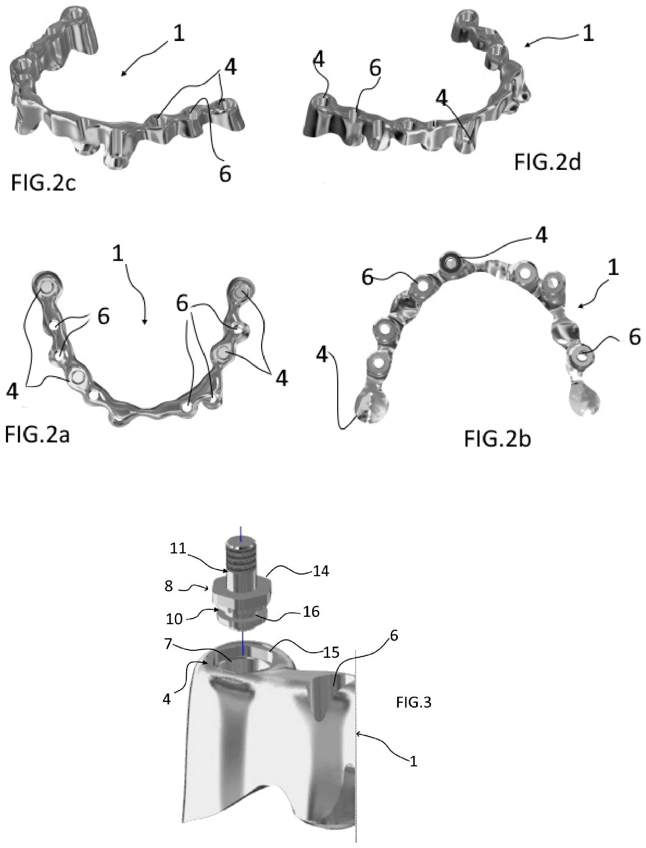

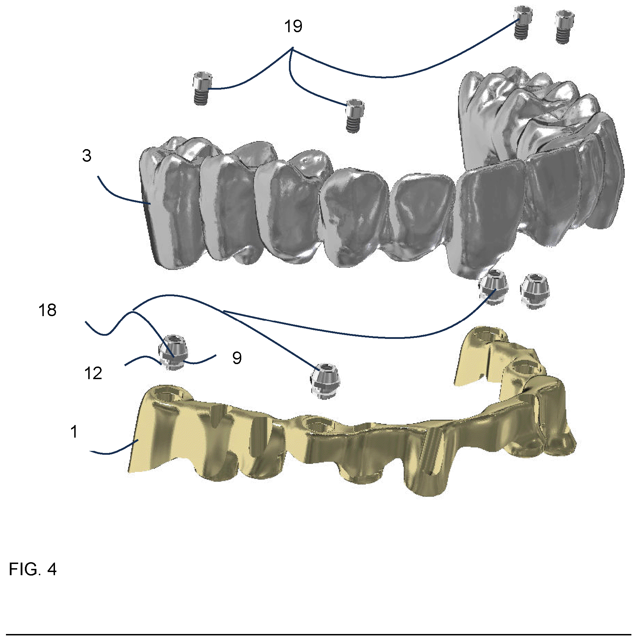

According to an embodiment illustrated in Fig. 4, the anchoring points 4 may be defined by a corresponding threaded bushing 18 housed in the seat 7. This includes the insertion part 9 with the undercut 12 previously described for the screw 8, in order to allow anchoring in the section 9 by immersion in a hardening filler material. Correspondingly, the anchoring element 11 is a screw 19 that can be screwed into the bushing 18. Further undescribed features of the embodiment of Fig. 4 are identical to the embodiment of Figures 1-3, and the reference numerals in Figure 4, identical to those in Figures 1-3, indicate components that are structurally and/or functionally identical to the corresponding elements in Figures 1-3.

## Claims

1. Apparatus for anchoring dental prostheses, comprising an intermediate anchoring element (1) provided with a first surface (2) for anchoring to an overlying dental prosthesis (3) by means of a plurality of first anchoring points (4) and a second surface (5) for anchoring to at least one underlying dental implant by means of at least one second anchoring point (6), said at least one first and a second anchoring point being in different positions from each other so that the anchoring between the intermediate anchoring element (1) and the dental prosthesis (3) is independent of the at least second anchoring point.

2. Apparatus according to claim 1, wherein at least one of said first anchoring points (4) comprises a seat (7) made in the intermediate element (1) and a lag screw (8) composed of a lower anchoring section (9) insertable in the seat (7) and a protruding upper section (10) from the intermediate element suitable for receiving a corresponding anchoring element (11) of the dental prosthesis (3) to the intermediate element (1).

3. Apparatus according to claim 2, wherein said seat (7) and said insertable portion (9) of the screw (8) are coupled with prevented rotation.
endo

4. Apparatus according to claim 2 or 3, wherein said insertable lower section (9) comprises a portion with undercut (12) for the purpose of allowing anchoring in the section (9) by immersion in a hardening filler material.

5. Apparatus according to one of claims 2-4, wherein said a protruding upper section (10) is a threaded element adapted to receive a corresponding threaded anchoring element (11).

6. Apparatus according to one of the preceding claims, wherein said second anchoring points (6) comprise a through hole adapted to fix corresponding anchoring abutments of a dental implant.

7. Apparatus according to one of the preceding claims, wherein said dental prosthesis (3) is a complete or partial arch prosthesis.

8. Apparatus according to one of the preceding claims, wherein said dental prosthesis (3) and/or said intermediate element (1) are made of biocompatible material preferably selected from medical grade titanium alloys, cobalt chromium steel, polymethyl methacrylate (PMMA), polyetheretherketone (Peek), lithium disilicate, zirconium oxide.

9. Apparatus according to one of the preceding claims, wherein said intermediate element (1) comprises four second anchoring points (6).

10. Apparatus according to one of the preceding claims, wherein said intermediate element (1) comprises six second anchoring points (6).

11. Method for preparing a dental prosthesis anchoring apparatus for attachment to an endosseous dental implant of a patient, comprising the following steps preparing an intermediate anchoring element (1) provided with a first surface (2) for anchoring to an overlying dental prosthesis (3) by means of a plurality of first anchoring points (4) and a second surface (5) for anchoring to at least one underlying dental implant by means of at least one second anchoring point (6), anchoring said prosthesis (3) to the intermediate element (1) by means of first anchoring points selected on the basis of the functional and aesthetic needs of the patient.
